Europäisches Patentamt

European Patent Office

Office européen des brevets

(19)

(11) **EP 1 661 944 A2**

(12) **DEMANDE DE BREVET EUROPEEN**

(43) Date de publication:
**31.05.2006 Bulletin 2006/22**

(51) Int Cl.:
*C08K 5/098* (2006.01)    *C08L 23/16* (2006.01)

(21) Numéro de dépôt: **05292318.2**

(22) Date de dépôt: **02.11.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **26.11.2004 FR 0412569**

(71) Demandeur: **HUTCHINSON**
**75008 Paris (FR)**

(72) Inventeurs:
• **Georget, Pierre**
  **45120 Girolles (FR)**
• **Beaudelet, Aline**
  **91290 La Norville (FR)**
• **Tregouet, Domitille**
  **78100 Saint Germain en Laye (FR)**

(74) Mandataire: **Bolinches, Michel Jean-Marie et al**
**Cabinet Orès**
**36, rue de St Pétersbourg**
**75008 Paris (FR)**

(54) **Composition de caoutchouc utilisable pour constituer un profilé d'étanchéité, un procédé de préparation de cette composition et un tel profilé d'étanchéité**

(57)    La présente invention concerne une composition de caoutchouc utilisable pour constituer un profilé d'étanchéité, un procédé de préparation de cette composition et un tel profilé d'étanchéité.

La composition selon l'invention, qui est utilisable pour constituer à l'état réticulé un profilé d'étanchéité présentant une surface non collante et une déformation rémanente à la compression réduite, est à base d'au moins un élastomère et comprend un système de réticulation comprenant au moins un peroxyde organique.

Selon l'invention, cette composition comprend :

(pce : parties en poids pour cent parties d'élastomère(s))

- selon une quantité égale ou supérieure à 2 pce, au moins un premier sel organique d'au moins un métal de transition choisi dans le groupe constitué par le manganèse, le fer, le cérium et le vanadium, et

- selon une quantité égale ou supérieure à 2 pce, au moins un second sel organique d'au moins un autre métal de transition choisi dans le groupe constitué par le zinc, le zirconium, le lithium, le calcium et le baryum.

EP 1 661 944 A2

**Description**

La présente invention concerne une composition de caoutchouc utilisable pour constituer un profilé d'étanchéité, un procédé de préparation de cette composition et un tel profilé d'étanchéité. L'invention s'applique notamment à des profilés d'étanchéité pour l'isolation de bâtiments ou d'automobiles.

Les profilés d'étanchéité sont usuellement constitués de compositions de caoutchouc ayant été spécifiquement réticulées au soufre dans une atmosphère d'air chaud. En effet, si l'on essaie de réticuler à l'air chaud (typiquement en étuve à une température de l'ordre de 200° C) ces compositions de caoutchouc au moyen d'un système de réticulation comprenant un peroxyde organique, l'expérience montre que les compositions réticulées obtenues présentent une surface externe collante ou poisseuse du fait que l'oxygène de l'air limite la réticulation en réagissant avec les espèces chimiques radicalaires formées lors de la décomposition de ce peroxyde, et cette surface collante, qui n'est que partiellement cuite, ne rend pas ces compositions utilisables pour constituer des profilés d'étanchéité.

C'est la raison pour laquelle la réticulation de ces compositions de caoutchouc par des peroxydes organiques est généralement mise en oeuvre au moyen de dispositifs relativement complexes et coûteux, tels que des bains de sels fondus.

Le document de Brevet US-A-4 334 043 présente un procédé de réticulation de compositions de caoutchouc via un peroxyde organique qui est mis en oeuvre dans une atmosphère d'air chaud et qui est néanmoins prévu pour conférer une surface relativement non collante à ces compositions. Ce procédé consiste à traiter ces compositions avant leur réticulation au moyen d'un agent de traitement qui est choisi dans le groupe constitué par un composé organométallique obtenu par réaction d'un acide aliphatique ou aromatique avec un élément de transition de la classification périodique, par des sels d'acides inorganiques d'éléments de transition, par un composé de lanthanide et par des mélanges de ces composés.

Les exemples de réalisation de ce document indiquent que les agents de traitement qui procurent les surfaces les moins collantes, en référence à quatre degrés de caractère collant matérialisés par l'intensité d'empreintes des échantillons sur du papier, sont l'un ou l'autre des sels suivants, incorporés isolément et toujours en solution dans du xylène :

l'octoate de cobalt, l'octoate de manganèse, l'octoate de fer, l'octoate de zirconium-fer, l'octoate de nickel ou l'octoate de cérium.

On notera que ce document ne concerne pas des compositions de caoutchouc pour profilés d'étanchéité.

On notera en outre que les tests utilisés dans ce document présentent l'inconvénient d'être entachés d'un manque de précision pour la détermination d'une surface d'échantillon totalement dépourvue de caractère collant, du fait que ces tests d'empreintes sont uniquement visuels et donnent lieu à seulement quatre degrés de collant allant d'une surface collante (+++) à une surface de collant réduit (---).

Par ailleurs, un autre inconvénient du procédé décrit dans ce document est que les agents de traitement testés doivent être nécessairement incorporés à la composition de caoutchouc à l'état de solution et en surface seulement (par projection ou enduction), pour conférer à cette dernière un collant réduit de niveau (---) à l'état réticulé, ce qui complique la mise en oeuvre du procédé et augmente ainsi son coût d'exploitation. De plus, les solvants utilisés, qui sont sources de composés organiques volatils, peuvent présenter une certaine toxicité et on notera en outre que leur incorporation à la composition de caoutchouc par mélangeage et non en surface est susceptible de générer des bulles indésirables dans la composition finalement obtenue, du fait que la réticulation est mise en oeuvre sans application d'une pression.

Un but de la présente invention est de remédier à ces inconvénients, et ce but est atteint en ce que la Demanderesse vient de découvrir d'une manière surprenante que l'incorporation à une composition de caoutchouc à base d'au moins un élastomère :

- selon une quantité égale ou supérieure à 2 pce, d'au moins un premier sel organique d'au moins un métal de transition choisi dans le groupe constitué par le manganèse, le fer, le cérium et le vanadium, et
- selon une quantité égale ou supérieure à 2 pce, d'au moins un second sel organique d'au moins un autre métal de transition choisi dans le groupe constitué par le zinc, le zirconium, le lithium, le calcium et le baryum,

permet, suite à la réticulation à l'air chaud de cette composition par un système de réticulation comprenant au moins un peroxyde organique, d'obtenir une composition de caoutchouc réticulée qui est utilisable pour constituer un profilé d'étanchéité présentant une surface véritablement non collante et une déformation rémanente à la compression (DRC) réduite.

Dans la présente description, l'abréviation pce désigne de manière connue les parties en poids pour cent parties d'élastomère(s) dans ladite composition de caoutchouc.

Par l'expression « composition à base de », il faut entendre une composition comportant le mélange et/ou le produit de réaction *in situ* des différents constituants utilisés, certains de ces composés pouvant réagir entre eux lors des différentes phases de préparation de la composition.

On notera que cette surface non collante et cette DRC réduite qui sont obtenues suite à la réticulation à l'air chaud de ladite composition par ledit peroxyde témoignent d'un effet inattendu de synergie existant entre lesdits premier et second sels organique, en comparaison de la seule utilisation d'un premier sel organique selon l'invention tel qu'un sel de manganèse, de fer ou de nickel, à l'instar des sels testés dans le document US-A-4 334 043.

A titre d'élastomère(s) utilisable(s) dans la composition selon l'invention, on peut citer tout élastomère diénique ou non réticulable par un peroxyde organique et convenant pour constituer la matrice élastomère de compositions pour profilés d'étanchéité.

De préférence, ledit ou l'un au moins desdits élastomère(s) est un copolymère d'éthylène et de propylène ou bien un terpolymère d'éthylène, de propylène et d'un diène (EPDM) et, à titre encore plus préférentiel, ledit ou chaque élastomère utilisé dans la composition selon l'invention est un terpolymère d'éthylène, de propylène et d'éthylidène norbornène.

Avantageusement, ledit ou chaque premier sel et ledit ou chaque second sel sont chacun indépendamment un sel d'un acide monocarboxylique ou dicarboxylique de type aliphatique saturé ou insaturé, de type alicyclique ou de type aromatique à un ou plusieurs cycles aromatiques substitués ou non.

Encore plus avantageusement, ledit ou chaque premier sel et/ou ledit ou chaque second sel sont issus d'acides monocarboxyliques aliphatiques saturés identiques ou différents, tels que l'acide acétique, l'acide 2-éthylhexanoïque et l'acide stéarique.

Selon un exemple préférentiel de réalisation de l'invention, ledit ou chaque premier sel et/ou ledit ou chaque second sel sont issus de l'acide 2-éthylhexanoïque.

Selon un autre exemple de réalisation de l'invention, ledit ou chaque premier sel et/ou ledit ou chaque second sel sont issus d'acides monocarboxyliques identiques ou différents de type alicyclique, tels que l'acide naphténique.

Avantageusement, la composition selon l'invention comprend un sel de manganèse à titre de premier sel.

Egalement avantageusement, la composition selon l'invention comprend un sel de zinc et/ou un sel de zirconium à titre de second(s) sel(s).

A titre encore plus avantageux, la composition selon l'invention comprend en combinaison un sel de manganèse, tel que le 2-éthylhexanoate de manganèse, et un sel de zinc, tel que le 2-éthylhexanoate de zinc.

De préférence, la composition selon l'invention comprend le(s)dit(s) premier(s) sel(s) selon une quantité égale ou supérieure à 4 pce et le(s)dit(s) second(s) sel(s) selon une quantité égale ou supérieure à 3 pce et, à titre encore plus préférentiel, ladite composition comprend, selon une quantité allant de 4 à 8 pce, du 2-éthylhexanoate de manganèse et, selon une quantité allant de 3 à 6 pce, du 2-éthylhexanoate de zinc.

Selon une autre caractéristique avantageuse de l'invention, ladite composition comprend ledit peroxyde organique selon une quantité de produit actif égale ou supérieure à 2,8 pce, ledit peroxyde répondant à la formule générale ROOR, dans laquelle R est un radical hydrocarboné aliphatique, alicyclique ou aromatique substitué ou non.

A titre de peroxyde organique utilisable dans la composition selon l'invention, on peut par exemple citer à titre nullement limitatif une dispersion, dans un élastomère tel qu'un copolymère d'éthylène et de propylène (EPM) ou dans un milieu minéral de type craie ou silice, d'un peroxyde choisi dans le groupe constitué par le 1,3 1,4-bis(ter-butylperoxyisopropyl)benzène, le peroxyde de di-(2 tertiobutyl isopropyl) benzène, un peroxyde de dicumyle et le (1,1' di tertiobutylperoxy)-3,3,5-triméthylcyclohexane.

Avantageusement, ledit système de réticulation de la composition selon l'invention comprend en outre, selon une quantité allant de 2 à 4 pce, du triallyl cyanurate et, selon une quantité allant de 1 à 3 pce, du triméthylolpropane triméthacrylate.

Selon une autre caractéristique de l'invention, ladite composition comprend en outre une charge renforçante selon une quantité supérieure à 100 pce et préférentiellement supérieure à 130 pce, cette charge renforçante étant avantageusement à base d'un noir de carbone, tel qu'un noir de grade 500 à 700.

On notera que les compositions conformes à l'invention comprennent également, outre le(s)dit(s) élastomères, lesdits sels organométalliques, ledit système de réticulation et ladite charge renforçante, tout ou partie des autres ingrédients habituellement utilisés dans les profilés d'étanchéité tels que, à titre non limitatif, des charges claires diluantes, des plastifiants, des agents desséchants ou des huiles d'extension.

Selon une autre caractéristique avantageuse de l'invention, ladite composition présente à l'état réticulé une déformation rémanente à la compression (DRC en %), mesurée selon la norme NF T46-011, qui est inférieure ou égale à 30 % et, encore plus avantageusement, qui est inférieure ou égale à 20 %, en comparaison des compositions connues réticulées au soufre pour profilés d'étanchéité qui présentent usuellement une DRC mesurée selon la même norme d'au moins 50 %.

Il en résulte que les profilés d'étanchéité selon l'invention, qui sont constitués de ladite composition et qui sont notamment utilisables pour l'isolation de bâtiments ou d'automobiles, présentent des dimensions réduites en comparaison de celles des profilés connus réticulés au soufre pour l'obtention d'une même DRC prédéterminée. On notera que pour un même profil géométrique, les profilés selon l'invention présentent une capacité d'étanchéité améliorée en comparaison de celle de ces profilés connus.

Un procédé de préparation selon l'invention de ladite composition de caoutchouc comprend l'incorporation à ladite composition réticulable desdits premier(s) et second(s) sels par travail mécanique, suivie d'une réticulation à l'air chaud de ladite composition.

Selon une autre caractéristique avantageuse de l'invention, ce procédé comprend le mélangeage *in situ* desdits premier(s) et second(s) sels lors de leur incorporation à ladite composition réticulable.

Les caractéristiques précitées de la présente invention, ainsi que d'autres, seront mieux comprises à la lecture de la description suivante de plusieurs exemples de réalisation de l'invention, donnés à titre illustratif et non limitatif.

Dans les exemples qui suivent, les propriétés des compositions de l'invention sont évaluées comme suit:

- A l'état non réticulé, on a mesuré les propriétés suivantes :

    - viscosité Mooney ML(1+4) à 100° C : selon la norme ISO 289-1, et
    - temps de grillage t5 (min.) à 125° C : selon la norme ISO 289-2.

- Pendant la réticulation, on a mesuré les propriétés rhéométriques suivantes des compositions à l'aide d'un rhéomètre MDR sans rotor à 170° C, selon la norme ASTM D 6204 :

    - couple minimal ML (dN.m),
    - couple maximal MH (dN.m),
    - la différence $\Delta C = MH - ML$ (dN.m), et
    - les temps t'c(05), t'c(50) et t'c(95) en min.

- A l'état réticulé, on a mesuré les propriétés physiques suivantes sur des éprouvettes confectionnées selon la norme NF T 46-001 :

    - densité : selon la norme ISO 2781,
    - dureté Shore A : selon la norme NF T 46-003,
    - résilience de rebondissement (restitution énergétique par rebond, normée à 100) : selon la norme ISO 4662,
    - déformation rémanente à la compression (DRC en %) : selon la norme NF T 46-011,
    - mesures de résistance à la traction sur des éprouvettes de type haltère comprenant la force à la rupture (FR en MPa), l'allongement à la rupture (AR en %) et les modules d'allongement sécants apparents (MPa) à 100 % et 300 % d'allongement (MAS 100 et MAS 300) : selon la norme NF T 46-002,
    - résistance au déchirement (en N/mm) : sur des éprouvettes

de Delft selon la norme NF T 46-039.

## EXEMPLES

### I/ Première série d'essais :

On a préparé deux compositions de caoutchouc T1 et T2 « témoin » qui sont respectivement réticulées au soufre et par un peroxyde organique, deux compositions de caoutchouc NC1 et NC2 non conformes à l'invention toutes deux réticulées par ce peroxyde et une composition de caoutchouc I1 selon l'invention également réticulée par ce peroxyde. Ces compositions conviennent pour un profilé d'étanchéité de joint de portière d'automobile.

Les compositions T1 et T2 présentent chacune la formulation suivante (exprimée en pce: parties en poids pour cent parties d'élastomères):

| | |
|---|---|
| Elastomères (1) | 100,00 |
| Huile d'extension | 12,90 |
| Noir de carbone | 94,00 |
| Charge claire renforçante (2) | 40,10 |
| Charge claire diluante | 49,90 |
| Plastifiant paraffinique | 33,90 |
| Polyéthylèneglycol | 2,40 |
| Acide stéarique | 1,40 |
| Agent desséchant (3) | 6,40 |
| Système de réticulation (4) | variable |

Avec

(1) = coupage de trois terpolymères d'éthylène, de propylène et d'éthylidène norbornène (EPDM), incluant :

- 8 pce d'un EPDM dont les taux massiques d'éthylène et de diène sont respectivement de 57,5 % et 4,7 %,

- 69,90 d'un EPDM dont les taux massiques d'éthylène et de diène sont respectivement de 55,5 % et 5,7 %, et

- 35 pce d'un EPDM étendu à 75 % d'huile, dont les taux massiques respectifs d'éthylène et de diène sont de 55% et 4 % ;

(2) : mélange de quartz et de kaolinite ;

(3) : oxyde de calcium sur support ; et

(4) : pour la composition T1 :

un système de réticulation au soufre comprenant (pce) :

| | |
|---|---|
| Oxyde de zinc | 9,10 |
| Disulfure de tétraméthylthiurame à 70 % | 1,10 |
| Tétrasulfure de tétraméthylène thiurame à 70 % | 1,10 |
| Mercaptobenzothiazole à 75 % | 0,43 |
| Disulfure de benzothiazyle à 70 % | 1,50 |
| Soufre maille 120 à 80 % | 1,70 |
| Dithiodicaprolactame à 80 % | 2,00 |

pour la composition T2 :

un système de réticulation au peroxyde comprenant 8 pce de « Luperox F 40 MF », i.e. une dispersion contenant 40 % en masse de 1,3 1,4-bis(ter-butylperoxyisopropyl)benzène à titre de produit actif.

La composition NC1 se distingue uniquement de la composition T2 en ce qu'elle comprend en outre 4 pce d'octoate de zinc qui est dilué dans un plastifiant paraffinique et qui est commercialisé par la société VANDERBILT sous la dénomination « Octoate Z » (la fraction massique de produit actif dans cette dilution est proche de 80 %).

La composition NC2 se distingue uniquement de cette composition T2 en ce qu'elle comprend en outre 4 pce d'octoate de manganèse qui est dilué dans un plastifiant paraffinique et qui est commercialisé par la société BORCHERS sous la dénomination « Octa Soligen Manganèse 10 HS » (la fraction massique de produit actif dans cette dilution est proche de 64 %, soit environ 10 % de manganèse métal).

La composition 11 selon l'invention se distingue uniquement de cette composition T2 en ce qu'elle comprend en outre 4 pce de cet octoate de manganèse combinés *in situ* à 4 pce de cet octoate de zinc.

On a préparé chaque composition en deux temps. Dans un premier temps réalisé dans un mélangeur interne via deux rotors tournant en sens inverse à 60 tr/min. et à 30° C, on a introduit et mélangé les ingrédients de chaque composition, à l'exception du système de réticulation. Dans un second temps réalisé dans un mélangeur externe au moyen de deux cylindres tournant en sens inverse à 40° C, on a incorporé à chaque composition le système de réticulation correspondant et l'on a procédé pendant environ 20 min. à un travail mécanique de chaque composition réticulable ainsi obtenue.

En vue d'évaluer le collant de chaque composition de caoutchouc à l'état réticulé, on a façonné sous forme de profilé tubulaire chaque composition ainsi obtenue par mélangeage et travail mécanique, au moyen d'une extrudeuse à vis pourvue d'une filière annulaire, puis on a procédé à la réticulation de chaque profilé extrudé pendant 5 min dans une étuve à 220° C. Après avoir soumis à un refroidissement chaque profilé réticulé ainsi obtenu, puis on a réalisé des tests tactiles et auditifs sur celui-ci afin d'évaluer son collant.

On a réalisé cette évaluation du collant en attribuant un niveau de collant pour chaque profilé allant de 0 à 10, où 0 correspond à la surface collante qui caractérise la composition T2 réticulée au peroxyde et où 10 correspond au contraire à la surface véritablement non collante qui caractérise usuellement la composition T1 réticulée au soufre. Dans un premier test, un opérateur a appliqué ses doigts sur la face externe de la paroi cylindrique de chaque profilé réticulé, pour en déduire une première évaluation tactile du collant du profilé. Dans un second test plus précis, l'opérateur a exercé manuellement un effort de compression radial sur chaque profilé (i.e. perpendiculairement à sa paroi cylindrique), puis il a évalué visuellement l'aptitude du profilé à retrouver son état initial après avoir cessé d'exercer cet effort de compression.

En vue de mesurer les propriétés physiques de chaque composition à l'état réticulé, on a façonné et réticulé sous forme de plaque chaque composition obtenue par mélangeage et travail mécanique, par moulage dans une presse à compression. On a chauffé cette presse en la mettant sous une pression de 100 bars, puis on a procédé à la réticulation par cuisson de chaque composition disposée à l'intérieur du moule de la presse jusqu'à un temps t'c(95) déterminé par le rhéomètre, qui correspond à 95 % de la réticulation complète. La température de chauffe, qui est celle fixée lors de la mesure de ce temps t'c(95), entraîne un fluage immédiat de chaque composition. On effectue un dégazage à intervalles de temps réguliers pendant la mise sous pression, pour éviter toute présence de bulles dans le mélange. Suite à la réticulation ainsi obtenue, on extrait manuellement la plaque réticulée constituée de la composition de caoutchouc correspondante.

Le tableau 1 ci-après recense les propriétés obtenues à l'état non réticulé, pendant la réticulation et à l'état réticulé pour chaque composition de caoutchouc T1, T2, NC1, NC2 et I1.

Tableau 1 :

|  | T1 | T2 | NC1 | NC2 | I1 |
|---|---|---|---|---|---|
| Viscosimètre Mooney | | | | | |
| ML(1+4) | 82,6 | 83,8 | 83,0 | 91,2 | 90,0 |
| t5 grillage (min.) | > 30 | 9,97 | 11,13 | 9,97 | 9,88 |
| Rhéomètre MDR à 170° C | | | | | |
| ML (dN.m) | 2,23 | 2,53 | 2,32 | 2,47 | 2,33 |
| MH (dN.m) | 20,92 | 16,47 | 15,93 | 16,93 | 14,57 |
| ΔC (dN.m) | 18,69 | 13,94 | 13,60 | 14,45 | 12,24 |
| t'c(05) (min.) | 1,88 | 0,52 | 0,52 | 0,56 | 0,57 |
| t'c(50) (min.) | 3,37 | 3,05 | 2,75 | 3,53 | 2,80 |
| t'c(95) (min.) | 14,63 | 12,78 | 11,07 | 16,32 | 14,38 |
| Propriétés physiques | | | | | |
| Collant | 10 | 0 | 0 | 8 | 10 |
| Densité | 1,32 | 1,29 | 1,28 | 1,28 | 1,28 |
| Shore A | 69 | 61 | 61 | 62 | 61 |
| Résilience | 50,6 | 49,4 | 49,0 | 48,8 | 48,6 |
| DRC (%) | 58 | 21 | 18 | 20 | 19 |
| MAS 100 (MPa) | 4,2 | 3,0 | 3,0 | 3,0 | 3,0 |
| MAS 300 (MPa) | 9,2 | 8,7 | 8,6 | 9,6 | - |
| Fr (MPa) | 9,8 | 9,1 | 9,7 | 10,5 | 7,5 |
| AR (%) | 321 | 301 | 307 | 323 | 246 |
| Rés. déchir. (N/mm) | 15,66 | 14,07 | 13,68 | 14,31 | 13,95 |

On notera que la combinaison d'un premier et d'un second sels organiques selon l'invention (respectivement de manganèse et de zinc) confère d'une manière surprenante au profilé constitué de la composition I1 selon l'invention une surface véritablement non collante (niveau de collant égal à 10), à l'instar de la surface de référence qui caractérise le profilé constitué de la composition T1 réticulée au soufre et contrairement au profilé constitué de la composition T2 réticulée au peroxyde dont la surface est très collante (niveau de collant égal à 0), tout en conférant à cette composition I1 une DRC nettement minimisée par rapport à celle de cette composition T1, à l'instar de la DRC de référence qui caractérise la composition T2 réticulée au peroxyde.

On notera en particulier que l'effet synergétique de cette combinaison de sels organiques de manganèse et de zinc est illustré par le fait que le sel de zinc incorporé à la composition NC1 ne permet pas de réduire à lui seul le collant du profilé, et que le sel de manganèse confère au profilé constitué de la composition NC2 une surface toujours quelque peu collante en comparaison de celle du profilé constitué de la composition I1 qui n'est pas du tout collante (voir l'écart significatif de 20 % existant entre le collant des compositions NC2 et 11).

## II/ Seconde série d'essais :

On a préparé à nouveau une composition T1 telle que décrite au § I/ ci-dessus, trois compositions NC3, NC4 et NC5 non conformes à l'invention et trois compositions I2, I3 et I4 selon l'invention. Ces compositions NC3 à NC5 et I2 à I4 sont toutes réticulées par le même peroxyde que la composition T2 décrite au § I/ et elles incorporent, outre les ingrédients de la composition T2, des combinaisons de sels organiques de métaux de transition et un co-agent de réticulation pour augmenter la dureté des compositions.

Les formulations des compositions NC3 à NC5 et I2 à I4 sont indiquées ci-après, en comparaison de celle de la composition T2 :

    NC3 = T2 + 1 pce octoate manganèse + 2 pce octoate zinc + 1 pce TAC
    NC4 = T2 + 1 pce octoate manganèse + 2 pce octoate zirconium + 2 pce TAC
    NC5 = T2 + 1 pce octoate manganèse + 2 pce octoate strontium + 4 pce TAC
    I2 = T2 + 2 pce octoate manganèse + 2 pce octoate zinc + 2 pce TAC
    I3 = T2 + 4 pce octoate manganèse + 2 pce octoate zinc + 4 pce TAC
    I4 = T2 + 4 pce octoate manganèse + 2 pce octoate zirconium + 1 pce TAC

Avec :

    Octoate de manganèse et octoate de zinc : identiques à ceux testés au § I/ ci-dessus,
    Octoate de zirconium : dilué dans un plastifiant paraffinique et commercialisé par la société BORCHERS sous la dénomination « Octoate Soligen 18 HS » (la fraction massique de produit actif dans cette dilution est proche de 69 %),
    Octoate de strontium : dilué dans un plastifiant paraffinique et commercialisé par la société BORCHERS sous la dénomination « Octoate Soligen Strontium 10 HS » (la fraction massique de produit actif dans cette dilution est proche de 44 %), et
    TAC = triallyl cyanurate (co-agent de réticulation) de dénomination commerciale « TAC 70 GR ».

On a préparé et analysé chaque composition réticulée comme indiqué au § I/. Le tableau 2 ci-après recense les propriétés obtenues à l'état non réticulé, pendant la réticulation et à l'état réticulé pour chaque composition de caoutchouc T1, NC3 à NC5 et I2 à I4.

### Tableau 2 :

|  | T1 | NC3 | NC4 | NC5 | I2 | I3 | I4 |
|---|---|---|---|---|---|---|---|
| ML(1+4) | 83,6 | 82,6 | 82,7 | 81,4 | 81,7 | 76,4 | 83,0 |
| t5 grillage (min.) | > 30 | 13,88 | 13,17 | 17,58 | 18,80 | 22,30 | 12,08 |
| ML (dN.m) | 2,08 | 2,05 | 2,18 | 2,17 | 2,03 | 1,79 | 2,01 |
| MH (dN.m) | 20,42 | 17,53 | 21,03 | 23,46 | 18,58 | 19,30 | 13,12 |
| ΔC (dN.m) | 18,34 | 15,48 | 18,86 | 21,29 | 16,55 | 17,50 | 11,11 |
| t'c(05) (min.) | 1,80 | 0,62 | 0,65 | 0,72 | 0,68 | 0,83 | 0,60 |
| t'c(50) (min.) | 3,35 | 3,25 | 3,38 | 3,67 | 3,65 | 4,23 | 3,28 |
| t'c(95) (min.) | 16,38 | 12,73 | 12,73 | 13,70 | 13,57 | 15,08 | 13,38 |
| **Collant** | **10** | **7** | **6** | **5** | **10** | **10** | **10** |
| Shore A | 69 | 63 | 65 | 67 | 64 | 65 | 63 |
| **DRC (%)** | **54** | **19** | **12** | **13** | **13** | **13** | **18** |
| MAS 100 (MPa) | 4,1 | 3,2 | 4,0 | 5,0 | 3,7 | 3,9 | 2,7 |
| MAS 300 (MPa) | 9,3 | 10,3 | - | - | - | - | 7,9 |
| Fr (MPa) | 9,9 | 10,0 | 10,4 | 10,1 | 10,1 | 9,6 | 9,0 |
| AR (%) | 324 | 293 | 256 | 202 | 258 | 227 | 328 |
| Rés. déchir. (N/mm) | 14,20 | 13,71 | 13,39 | 13,08 | 12,86 | 12,09 | 14,31 |

Ce tableau montre que la combinaison d'au moins 2 pce d'un sel de manganèse, à titre de premier sel selon l'invention, et de 2 pce d'un sel de zinc ou de zirconium, à titre de second sel selon l'invention, confère aux profilés respectivement constitués des compositions I2 à I4 une surface véritablement non collante (niveau de collant égal à 10) à l'instar de la surface qui caractérise le profilé constitué de la composition T1 réticulée au soufre, tout en conférant à ces compositions I2 à I4 une DRC nettement minimisée par rapport à celle de cette composition T1.

On notera que l'utilisation de 4 pce d'un sel de manganèse constitue un mode préférentiel selon l'invention (voir notamment l'allongement à la rupture de la composition I4, supérieur à celui de la composition T1).

### III/ Troisième série d'essais :

On a préparé à nouveau deux compositions T1 et T2 telles que décrites au § I/ ci-dessus, trois compositions NC6, NC7 et NC8 non conformes à l'invention et une composition I5 selon l'invention. Ces compositions NC6 à NC8 et I5 sont toutes réticulées par le même peroxyde que la composition T2 et elles incorporent, outre les ingrédients de la composition T2, des combinaisons de sels organiques de métaux de transition tels que décrits aux § I/ et II/ ci-dessus et un co-agent de réticulation pour augmenter la dureté des compositions.

Les formulations respectives de ces compositions NC6 à NC8 et I5 sont indiquées ci-après, en comparaison de celle de la composition T2 :

$$NC6 = T2 + 4 \text{ pce octoate manganèse} + 0,5 \text{ pce octoate zinc}$$
$$+ 0,5 \text{ pce octoate zirconium} + 2 \text{ pce TAC}$$

$$NC7 = T2 + 4 \text{ pce octoate manganèse} + 0,5 \text{ pce octoate zinc}$$
$$+ 1 \text{ pce octoate zirconium} + 2 \text{ pce TAC}$$

$$NC8 = T2 + 4 \text{ pce octoate manganèse} + 1 \text{ pce octoate zinc}$$
$$+ 0,5 \text{ pce octoate zirconium} + 2 \text{ pce TAC}$$

$$I5 = T2 + 4 \text{ pce octoate manganèse} + 1 \text{ pce octoate zinc}$$
$$+ 1 \text{ pce octoate zirconium} + 2 \text{ pce TAC,}$$

avec TAC = triallyl cyanurate de dénomination commerciale «TAC 70 GR».

On a préparé et analysé chaque composition réticulée comme indiqué au § I/. Le tableau 3 ci-après recense les propriétés obtenues à l'état non réticulé, pendant la réticulation et à l'état réticulé pour chaque composition de caoutchouc T1, T2, NC6 à NC8 et I5.

Tableau 3 :

|  | T1 | T2 | NC6 | NC7 | NC8 | I5 |
|---|---|---|---|---|---|---|
| ML(1+4) | 81,9 | 86,8 | 80,5 | 81,1 | 82,3 | 80,5 |
| t5 grillage (min.) | > 30 | 10,50 | 17,68 | 16,12 | 15,12 | 17,50 |
| ML (dN.m) | 2,00 | 2,48 | 1,91 | 1,96 | 1,97 | 1,83 |
| MH (dN.m) | 19,73 | 16,69 | 14,86 | 14,64 | 15,10 | 13,48 |
| ΔC (dN.m) | 17,73 | 14,21 | 12,94 | 12,68 | 13,13 | 11,65 |
| t'c(05) (min.) | 1,75 | 0,52 | 0,67 | 0,65 | 0,65 | 0,70 |
| t'c(50) (min.) | 3,25 | 3,08 | 3,48 | 3,33 | 3,38 | 3,37 |
| t'c(95) (min.) | 12,17 | 13,25 | 13,43 | 13,28 | 13,45 | 13,92 |
| **Collant** | **10** | **0** | **7** | **9** | **8** | **10** |
| Shore A | 68 | 62 | 63 | 62 | 63 | 63 |
| **DRC (%)** | **65** | **16** | **17** | **16** | **15** | **15** |
| MAS 100 (MPa) | 3,8 | 2,8 | 3,0 | 2,8 | 2,8 | 2,9 |
| MAS 300 (MPa) | 8,7 | 8,5 | 9,4 | 8,4 | 8,7 | 9,1 |
| Fr (MPa) | 9,3 | 8,8 | 9,6 | 9,2 | 9,5 | 9,4 |
| AR (%) | 332 | 309 | 302 | 320 | 318 | 306 |
| Rés. déchir. (N/mm) | 15,37 | 14,00 | 14,03 | 13,69 | 14,11 | 13,64 |

Ce tableau montre qu'au moins 2 pce de seconds sels organiques selon l'invention (de zinc et de zirconium, respectivement) sont nécessaires, associés à 4 pce d'un premier sel selon l'invention (de manganèse) pour conférer au profilé constitué de la composition I5 une surface véritablement non collante (niveau de collant égal à 10) à l'instar de la surface de référence qui caractérise le profilé constitué de la composition T1 réticulée au soufre, tout en conférant à cette composition I5 une DRC nettement minimisée par rapport à celle de cette composition T1. En effet, les compositions non conformes NC6 à NC8, caractérisées par une quantité de seconds sels organiques égale à 1 ou 1,5 pce, ne permettent pas de conférer cette surface non collante aux profilés qui en sont constitués.

On notera que les propriétés de résistance à la traction de cette composition I5 selon l'invention sont satisfaisantes, étant sensiblement analogues à celles de la composition T1 réticulée au soufre (voir notamment la force à la rupture, l'allongement à la rupture et la résistance au déchirement).

**IV/ <u>Quatrième série d'essais</u> :**

On a préparé à nouveau une composition T1 telle que décrite au § 1/, trois compositions NC9, NC10 et NC11 non conformes à l'invention et quatre compositions 16, 17, 18 et 19 selon l'invention. Ces compositions NC9 à NC11 et I6 à I9 sont toutes réticulées par le même peroxyde que la composition T2 du § 1/ mais avec diverses quantités de ce peroxyde (6, 7 ou 8 pce), et elles incorporent des combinaisons de sels organiques de manganèse et de zinc tels que décrits au § 1/ ci-dessus et divers co-agents de réticulation pour augmenter la dureté des compositions.

Les formulations respectives de ces compositions NC9 à NC11 et I6 à I9 sont indiquées ci-après, en comparaison de celle de la composition T2 :

## NC9 = T2' (= T2 incluant 6 pce de « Luperox F 40 MF » au lieu de 8 pce)

### + 4 pce octoate manganèse + 2 pce octoate zinc + 4 pce TAC

## NC10 = T2' (= T2 incluant 6 pce de « Luperox F 40 MF » au lieu de 8 pce)

### + 4 pce octoate manganèse + 2 pce octoate zinc + 4 pce PERTAC

## NC11 = T2' (= T2 incluant 6 pce de « Luperox F 40 MF » au lieu de 8 pce)

### + 4 pce octoate manganèse + 2 pce octoate zinc + 4 pce TMPTMA 70

## I6 = T2'' (= T2 incluant 7 pce de « Luperox F 40 MF » au lieu de 8 pce)

### + 4 pce octoate manganèse + 2 pce octoate zinc + 4 pce TAC

## I7 = T2 (incluant 8 pce de « Luperox F 40 MF » comme indiqué au § I/)

### + 4 pce octoate manganèse + 2 pce octoate zinc + 4 pce TAC

## I8 = T2 (incluant 8 pce de « Luperox F 40 MF » comme indiqué au § I/)

### + 4 pce octoate manganèse + 2 pce octoate zinc + 4 pce PERTAC

## I9 = T2 (incluant 8 pce de « Luperox F 40 MF » comme indiqué au § I/)

### + 4 pce octoate manganèse + 2 pce octoate zinc + 4 pce TMPTMA 70

avec

TAC = triallyl cyanurate de dénomination « TAC 70 GR ».
« PERTAC » = dénomination commerciale d'un polymère de type polybutadiène-1,2, et
« TMPTMA 70 » = triméthylolpropane triméthacrylate.

On a préparé et analysé chaque composition réticulée comme indiqué au § I/. Le tableau 4 ci-après recense les propriétés obtenues à l'état non réticulé, pendant la réticulation et à l'état réticulé pour chaque composition de caoutchouc T1, NC9 à NC11 et I6 à I8.

Tableau 4 :

| | T1 | NC9 | NC10 | NC11 | I6 | I7 | I8 | I9 |
|---|---|---|---|---|---|---|---|---|
| ML(1+4) | 84,8 | 77,1 | 80,3 | 77,7 | 77,1 | 77,4 | 79,9 | 78,3 |
| t5 grillage (min.) | 27,03 | 22,55 | 15,45 | 10,08 | 22,45 | 22,25 | 11,98 | 9,42 |
| ML (dN.m) | 2,13 | 1,80 | 1,96 | 1,88 | 1,83 | 1,89 | 1,93 | 1,97 |
| MH (dN.m) | 20,12 | 14,85 | 13,02 | 15,99 | 16,92 | 20,53 | 14,63 | 18,30 |
| ΔC (dN.m) | 17,99 | 13,04 | 11,06 | 14,11 | 15,08 | 18,64 | 12,70 | 16,33 |
| t'c(05) (min.) | 1,82 | 2,75 | 0,68 | 0,53 | 0,77 | 0,72 | 0,63 | 0,48 |
| t'c(50) (min.) | 3,33 | 8,55 | 3,47 | 2,37 | 3,93 | 3,82 | 3,28 | 2,13 |
| t'c(95) (min.) | 11,20 | 14,32 | 13,37 | 11,22 | 14,58 | 14,67 | 13,67 | 12,58 |
| Collant | 10 | 9 | 9 | 9 | 10 | 10 | 10 | 10 |
| Shore A | 66 | 60 | 58 | 59 | 62 | 64 | 61 | 62 |
| DRC (%) | 76 | 20 | 29 | 27 | 17 | 14 | 20 | 19 |
| MAS 100 (MPa) | 4,0 | 2,3 | 2,1 | 2,6 | 3,2 | 3,3 | 2,5 | 3,0 |
| MAS 300 (MPa) | 8,9 | 7,3 | 6,7 | 7,9 | - | - | 8,3 | 5,8 |
| Fr (MPa) | 9,5 | 8,3 | 8,0 | 8,9 | 9,6 | 10,0 | 9,2 | 9,4 |
| AR (%) | 322 | 334 | 376 | 325 | 268 | 268 | 322 | 286 |
| Rés. déchir. (N/mm) | 14,59 | 12,86 | 12,83 | 13,10 | 12,00 | 12,13 | 12,68 | 13,05 |

Ce tableau montre notamment qu'une quantité de peroxyde organique au moins égale à 7 pce, associée à 4 pce d'un premier sel et 2 pce d'un second sel selon l'invention (de manganèse et de zinc, respectivement) permet de conférer au profilé constitué des compositions 16 à 19 une surface véritablement non collante (niveau de collant égal à 10), à l'instar de la surface de référence qui caractérise le profilé constitué de la composition T1 réticulée au soufre, tout en conférant à ces compositions I6 à I9 une DRC nettement minimisée par rapport à celle de cette composition T1. En effet, les compositions non conformes NC9 à NC11, caractérisées par une quantité de peroxyde organique de seulement 6 pce, ne confèrent qu'une surface pratiquement non collante (niveau de collant égal à 9) aux profilés qui en sont constitués.

Ce tableau montre également que les co-agents préférentiels selon l'invention pour l'amélioration des propriétés mécaniques, et notamment de la dureté Shore A, sont le TAC et le TMPTMA.

**V/ <u>Cinctuième série d'essais :</u>**

On a préparé à nouveau deux compositions T1 et T2 telles que décrites au § I/ et quatre compositions I10, I11, I12 et I13 selon l'invention. Ces compositions I10 à I13 sont toutes réticulées par le même peroxyde que la composition T2 du § I/ avec diverses quantités de ce peroxyde (7 ou 8 pce), et elles incorporent des combinaisons de sels organiques de manganèse et de zinc tels que décrits au § I/ ci-dessus et optionnellement un mélange selon diverses quantités de « TAC 70 GR » et de « TMPTMA 70 » à titre de co-agents de réticulation, pour augmenter la dureté des compositions.
A l'instar des compositions faisant l'objet des § I/ à IV/, ces compositions conviennent pour un profilé d'étanchéité pour joint de portière d'automobile.
Les formulations respectives de ces compositions I10 à I13 sont indiquées ci-après, en comparaison de celle de la composition T2 :

I10 = T2 (incluant 8 pce de « Luperox F 40 MF » comme indiqué au § I/)

+ 4 pce octoate manganèse + 2 pce octoate zinc

I11 = T2 (incluant 8 pce de « Luperox F 40 MF » comme indiqué au § I/)

+ 4 pce octoate manganèse + 2 pce octoate zinc + 2 pce TMPTMA + 2 pce TAC

I12 = T2 (incluant 8 pce de « Luperox F 40 MF » comme indiqué au § I/)

+ 4 pce octoate manganèse + 2 pce octoate zinc + 2 pce TMPTMA + 3 pce TAC

I13 = T2'' (= T2 incluant 7 pce de « Luperox F 40 MF » au lieu de 8 pce)

+ 4 pce octoate manganèse + 2 pce octoate zinc + 2 pce TMPTMA + 3 pce TAC.

On a préparé et analysé chaque composition réticulée comme indiqué au § I/. Le tableau 5 ci-après recense les propriétés obtenues à l'état non réticulé, pendant la réticulation et à l'état réticulé pour chaque composition de caoutchouc T1, T2 et I10 à I13.

## Tableau 5 :

|  | T1 | T2 | I10 | I11 | I12 | I13 |
|---|---|---|---|---|---|---|
| ML(1+4) | 78,5 | 83,8 | 77,5 | 75,3 | 74,7 | 74,7 |
| t5 grillage (min.) | 28,03 | 10,77 | 11,03 | 10,33 | 8,90 | 9,28 |
| ML (dN.m) | 2,04 | 2,44 | 1,99 | 1,94 | 1,92 | 1,94 |
| MH (dN.m) | 19,45 | 16,14 | 10,03 | 20,02 | 20,22 | 18,77 |
| ΔC (dN.m) | 17,41 | 13,70 | 8,04 | 18,08 | 18,30 | 16,83 |
| t'c(05) (min.) | 1,77 | 0,50 | 0,57 | 0,53 | 0,50 | 0,52 |
| t'c(50) (min.) | 3,22 | 2,97 | 3,37 | 2,75 | 2,55 | 2,58 |
| t'c(95) (min.) | 11,25 | 12,67 | 14,55 | 14,30 | 13,90 | 13,97 |
| **Collant** | **10** | **0** | **10** | **10** | **10** | **10** |
| Shore A | 69 | 63 | 60 | 64 | 65 | 64 |
| **DRC (%)** | **52** | **17** | **18** | **15** | **14** | **16** |
| MAS 100 (MPa) | 3,9 | 2,8 | 2,3 | 2,9 | 3,2 | 2,8 |
| MAS 300 (MPa) | 9,4 | 8,5 | 7,2 | - | - | - |
| Fr (MPa) | 10,1 | 8,8 | 9,1 | 9,7 | 9,4 | 9,1 |
| AR (%) | 329 | 301 | 369 | 273 | 262 | 286 |
| Rés. déchir. (N/mm) | 13,93 | 13,07 | 13,57 | 11,59 | 12,74 | 12,00 |

Ce tableau montre notamment qu'une quantité de peroxyde organique au moins égale à 7 pce, associée à 4 pce d'un premier sel et 2 pce d'un second sel selon l'invention (de manganèse et de zinc, respectivement) permet de conférer au profilé constitué des compositions I10 à I13 une surface véritablement non collante, à l'instar de la surface qui caractérise le profilé constitué de la composition T1, tout en conférant à ces compositions I10 à I13 une DRC nettement minimisée par rapport à celle de cette composition T1.

Ce tableau montre également que le mélange des deux co-agents TAC et TMPTMA permet d'augmenter sensiblement la dureté Shore A des compositions I11 à I13 en comparaison de la composition I10 qui ne contient pas de co-agent, tout en conférant des propriétés de résistance à la traction satisfaisantes (voir notamment l'allongement à la rupture).

### VI/ Sixième série d'essais :

On a préparé deux nouvelles compositions de caoutchouc T3 et T4 « témoin » qui sont respectivement réticulées au soufre et par un autre peroxyde organique, et une nouvelle composition de caoutchouc I14 selon l'invention également réticulée par ce nouveau peroxyde. Ces compositions conviennent pour constituer un profilé d'étanchéité pour le bâtiment.

Les compositions T3 et T4 présentent chacune la formulation suivante (exprimée en pce: parties en poids pour cent parties d'élastomère):

| | |
|---|---|
| Elastomère (1) | 100,00 |
| Noir de carbone | 170,00 |
| Charge claire diluante | 40,00 |
| Plastifiant paraffinique | 108,00 |
| Acide stéarique | 1,00 |
| Agent desséchant (2) | 6,40 |
| Système de réticulation (3) | variable |

Avec

(1) = terpolymère d'éthylène, de propylène et d'éthylidène norbornène (EPDM) dont le taux massique de propylène est de 40 % ;

(2) : oxyde de calcium sur support ; et

(3) : - pour la composition T3 :

un système de réticulation au soufre comprenant (pce) :

| | |
|---|---|
| Oxyde de zinc | 2,50 |
| Dithiodimorpholine à 80 % | 1,90 |
| Monosulfure de tétraméthylthiurame | 1,70 |
| Mercaptobenzothiazole | 0,85 |
| Soufre maille 120 | 1,30 |

- pour la composition T4 :

un système de réticulation au peroxyde comprenant 8 pce de « Perkadox 1440 B GR », i.e. une dispersion contenant 40 % en masse du peroxyde de di-(2 tertiobutyl isopropyl) benzène à titre de produit actif.

La composition I14 selon l'invention se distingue uniquement de la composition T4 réticulée au peroxyde en ce qu'elle comprend en outre 4 pce d'octoate de manganèse combinés *in situ* à 2 pce d'octoate de zinc, tels que décrits au § I/ ci-dessus.

On a préparé et analysé chaque composition réticulée T3, T4 et I14 comme indiqué au § I/ ci-dessus. Le tableau 6 ci-après recense les propriétés obtenues à l'état non réticulé, pendant la réticulation et à l'état réticulé pour chaque composition de caoutchouc T3, T4 et I14.

Tableau 6 :

|  | T3 | T4 | I14 |
|---|---|---|---|
| ML(1+4) | 58,0 | 60,0 | 58,0 |
| t5 grillage (min.) | 17,78 | 22,53 | > 30 |
| ML (dN.m) | 2,23 | 2,09 | 1,77 |
| MH (dN.m) | 13,24 | 9,69 | 7,65 |
| ΔC (dN.m) | 11,01 | 7,60 | 5,88 |
| t'c(05) (min.) | 1,92 | 0,60 | 0,70 |
| t'c(50) (min.) | 3,58 | 4,37 | 3,62 |
| t'c(95) (min.) | 6,43 | 16,43 | 12,05 |
| **Collant** | **8** | **0** | **9** |
| Densité | 1,22 | 1,21 | 1,21 |
| Shore A | 66 | 54 | 55 |
| **DRC (%)** | **50** | **17** | **27** |
| MAS 100 (MPa) | 3,9 | 2,1 | 1,7 |
| MAS 300 (MPa) | 9,8 | 5,7 | 4,4 |
| Fr (MPa) | 9,8 | 5,9 | 5,1 |
| AR (%) | 308 | 316 | 366 |
| Rés. déchir. (N/mm) | 12,83 | 14,59 | 12,86 |

Ce tableau montre que la combinaison des premier et second sels selon l'invention associés au peroxyde de di-(2 tertiobutyl isopropyl) benzène, en lieu et place du 1,3 1,4-bis(ter-butylperoxyisopropyl)benzène utilisé aux § I/ à V/ ci-dessus, avec une matrice élastomère constituée d'un autre EPDM que ceux utilisés précédemment, confère au profilé constitué de la composition I14 une surface pratiquement non collante (niveau de collant égal à 9) à l'instar de la surface qui caractérise le profilé constitué de la composition T3 réticulée au soufre (niveau de collant égal à 8), tout en conférant à cette composition I14 une DRC qui est nettement minimisée par rapport à celle de cette composition T3 et similaire à celle de la composition T4 réticulée au peroxyde.
On notera également que les propriétés de résistance à la traction de cette composition I14 selon l'invention sont satisfaisantes, étant analogues ou meilleures à celles de la composition T3 (voir notamment l'allongement à la rupture et la résistance au déchirement qui sont améliorés).

**VII/ Septième série d'essais :**

On a préparé à nouveau des compositions T3 et T4 telles que décrite au § VI/ ci-dessus et une nouvelle composition I15 selon l'invention qui se distingue uniquement de la composition I14 du § VI/ en ce qu'elle comprend en outre un mélange de co-agents de réticulation pour augmenter la dureté de la composition.
Ce mélange est constitué de 4 pce de « TAC 70 GR » et de 2 pce de « TMPTA 70 », tels que définis ci-dessus.
On a préparé et analysé chaque composition réticulée T3, T4 et I15 comme indiqué au § I/ ci-dessus. Le tableau 7 ci-après recense les propriétés obtenues à l'état non réticulé, pendant la réticulation et à l'état réticulé pour chaque composition de caoutchouc T3, T4 et I15.

<u>Tableau 7</u> :

| | T3 | T4 | I15 |
|---|---|---|---|
| ML(1+4) | 60,0 | 61,0 | 58,0 |
| t5 grillage (min.) | 17,62 | 11,42 | 11,75 |
| ML (dN.m) | 2,27 | 2,25 | 1,75 |
| MH (dN.m) | 12,35 | 7,73 | 11,48 |
| ΔC (dN.m) | 10,08 | 5,48 | 9,74 |
| t'c(05) (min.) | 1,43 | 0,50 | 0,60 |
| t'c(50) (min.) | 2,47 | 2,92 | 2,45 |
| t'c(95) (min.) | 4,85 | 13,57 | 10,17 |
| **Collant** | **8** | **0** | **10** |
| Densité | 1,22 | 1,27 | 1,21 |
| Shore A | 66 | 52 | 59 |
| **DRC (%)** | **59** | **29** | **25** |
| MAS 100 (MPa) | 3,3 | 1,6 | 2,3 |
| MAS 300 (MPa) | 8,5 | 2,9 | 5,7 |
| Fr (MPa) | 8,8 | 2,9 | 5,7 |
| AR (%) | 322 | 294 | 301 |
| Rés. déchir. (N/mm) | 16,00 | 10,00 | 12,00 |

Ce tableau montre que l'incorporation d'un mélange de co-agents TAC et TMPTMA à la composition I15 comprenant la combinaison des premier et second sels selon l'invention associés au peroxyde de di-(2 tertiobutyl isopropyl) benzène, confère au profilé constitué de la composition I15 une surface véritablement non collante (niveau de collant égal à 10) en comparaison de celle quelque peu collante qui caractérise le profilé constitué de la composition T3 (niveau de collant égal à 8), tout en conférant à cette composition I15 une DRC nettement minimisée par rapport à celle de cette composition T3 et même inférieure à celle de la composition T4 réticulée au peroxyde.
On notera également que les propriétés de dureté et d'allongement à la rupture de cette composition I15 selon l'invention sont satisfaisantes, étant nettement supérieures à celles de la composition T4 et sensiblement analogues à celles de la composition T3.

**VIIII** <u>**Huitième série d'essais :**</u>

On a préparé à nouveau une composition T3 telle que décrite au § VI/ ci-dessus, deux nouvelles compositions « témoin » T4' et T4" différant uniquement de la composition T4 par la nature du peroxyde utilisé et deux nouvelles compositions I16 et I17 selon l'invention qui diffèrent uniquement de la composition I15 par la nature de ce peroxyde.
Plus précisément, la composition T4' incorpore 8 pce d'une dispersion commercialisée sous la dénomination « Dicup 40C », contenant 40 % en masse d'un peroxyde de dicumyle à titre de produit actif.

La composition T4" incorpore 8 pce d'une dispersion commercialisée sous la dénomination « Trigonox 29/40 MB », i.e. contenant 40 % en masse de (1,1' di tertiobutylperoxy)-3,3,5-triméthylcyclohexane à titre de produit actif.

La composition I16 se distingue uniquement de la composition T4' en ce qu'elle comprend en outre, comme la composition I15, d'une part, 4 pce d'octoate de manganèse combinés à 2 pce d'octoate de zinc et, d'autre part, le mélange précité de co-agents TAC (4 pce) et TMPTMA (2 pce).

La composition I17 se distingue uniquement de la composition T4" en ce qu'elle comprend en outre, comme la composition I15, d'une part, 4 pce d'octoate de manganèse combinés à 2 pce d'octoate de zinc et, d'autre part, le mélange précité de co-agents TAC (4 pce) et TMPTMA (2 pce).

On a préparé et analysé chaque composition réticulée T3, T4', T4", I16 et I17 comme indiqué au § I/ ci-dessus. Le tableau 8 ci-après recense les propriétés obtenues à l'état non réticulé, pendant la réticulation et à l'état réticulé pour chaque composition de caoutchouc.

## Tableau 8 :

|  | T3 | T4' | T4" | I16 | I17 |
|---|---|---|---|---|---|
| ML(1+4) | 65,2 | 61,5 | 65,0 | 58,6 | 57,4 |
| t5 grillage (min.) | 15,98 | 12,93 | 4,07 | 11,25 | 3,67 |
| ML (dN.m) | 2,40 | 2,37 | 2,46 | 1,8 | 2,12 |
| MH (dN.m) | 14,09 | 5,97 | 5,09 | 8,97 | 8,45 |
| ΔC (dN.m) | 11,69 | 3,60 | 2,63 | 7,17 | 6,33 |
| t'c(05) (min.) | 1,58 | 0,42 | 0,22 | 0,53 | 0,25 |
| t'c(50) (min.) | 3,02 | 1,70 | 0,40 | 1,78 | 0,45 |
| t'c(95) (min.) | 5,83 | 6,22 | 0,85 | 5,75 | 0,97 |
| **Collant** | **8** | **0** | **0** | **10** | **10** |
| Densité | 1,22 | 1,21 | 1,21 | 1,21 | 1,21 |
| Shore A | 70 | 49 | 45 | 54 | 52 |
| **DRC (%)** | - | - | - | - | - |
| MAS 100 (MPa) | 4,3 | 1,3 | 1,1 | 1,7 | 1,6 |
| MAS 300 (MPa) | 8,9 | - | - | 4,0 | 4,3 |
| Fr (MPa) | 10,3 | 1,6 | 1,2 | 4,6 | 4,8 |
| AR (%) | 288 | 206 | 137 | 361 | 353 |
| Rés. déchir. (N/mm) | 18,64 | 6,62 | 5,64 | 10,47 | 11,56 |

Ce tableau montre que l'incorporation d'un mélange TAC-TMPTMA à l'une ou l'autre des compositions I16 et I17 comprenant les premier et second sels selon l'invention associés au peroxyde de dicumyle ou au (1,1' di tertiobutylperoxy)-3,3,5-triméthylcyclohexane, confère au profilé constitué de la composition I16 ou I17 une surface véritablement non collante en comparaison de celle quelque peu collante qui caractérise le profilé constitué de la composition T3 réticulée au soufre, tout en conférant à ces compositions I16 ou I17 une dureté acceptable et un allongement à la rupture nettement amélioré par rapport à celui de cette composition T3.

**IX/ <u>Neuvième série d'essais :</u>**

On a préparé deux nouvelles compositions de caoutchouc T5 et T6 « témoin » qui sont respectivement réticulées au soufre et par un peroxyde organique, et une nouvelle composition de caoutchouc I18 selon l'invention également réticulée par ce peroxyde.

Les compositions T5 et T6 présentent chacune la formulation suivante (exprimée en pce: parties en poids pour cent parties d'élastomère

| | |
|---|---|
| Elastomère (1) | 100,00 |
| Noir de carbone | 170,00 |
| Charge claire diluante | 40,00 |
| Plastifiant paraffinique | 108,00 |
| Acide stéarique | 1,00 |
| Agent desséchant (2) | 3,80 |
| Système de réticulation (3) | variable |

Avec

(1) = à base d'un terpolymère d'éthylène, de propylène et d'éthylidène norbornène (EPDM) dont les taux massiques d'éthylène et d'éthylidène norbornène sont respectivement de 67 % et 4,9 % ;

(2) : oxyde de calcium sur support ; et

(3) : - pour la composition T5 :

un système de réticulation au soufre comprenant (pce) :

| | |
|---|---|
| Oxyde de zinc | 2,50 |
| Dithiodimorpholine à 80 % | 1,90 |
| Monosulfure de tétraméthylthiurame | 1,70 |
| Mercaptobenzothiazole | 0,85 |
| Soufre maille 120 | 1,30 |

- pour la composition T6 :

un système de réticulation au peroxyde comprenant 8 pce de « Perkadox 1440 B GR » à titre de peroxyde organique.

La composition I18 selon l'invention se distingue uniquement de la composition T6 réticulée au peroxyde en ce qu'elle comprend en outre 4 pce d'octoate de manganèse combinés à 2 pce d'octoate de zinc, tels que décrits au § I/ ci-dessus.

On a préparé et analysé chaque composition réticulée T5, T6 et I18 comme indiqué au § I/ ci-dessus. Le tableau 9 ci-après recense les propriétés obtenues à l'état non réticulé, pendant la réticulation et à l'état réticulé pour chaque composition de caoutchouc T5, T6 et I18.

## Tableau 9 :

|  | T5 | T6 | I18 |
|---|---|---|---|
| ML(1+4) | 77,0 | 73,0 | 76,0 |
| t5 grillage (min.) | 16,00 | 10,78 | 5,23 |
| ML (dN.m) | 5,66 | 5,08 | 4,31 |
| MH (dN.m) | 16,64 | 15,12 | 12,23 |
| $\Delta$C (dN.m) | 10,98 | 10,04 | 7,92 |
| t'c(05) (min.) | 1,62 | 0,47 | 0,43 |
| t'c(50) (min.) | 3,02 | 3,50 | 2,65 |
| t'c(95) (min.) | 5,25 | 14,20 | 9,88 |
| **Collant** | **9** | **5** | **9** |
| Densité | 1,27 | 1,26 | 1,26 |
| Shore A | 77 | 73 | 71 |
| **DRC (%)** | **60** | **18** | **22** |
| MAS 100 (MPa) | 6,3 | 3,3 | 3,1 |
| MAS 300 (MPa) | - | - | - |
| Fr (MPa) | 9,6 | 5,4 | 5,3 |
| AR (%) | 151 | 180 | 211 |
| Rés. déchir. (N/mm) | 12,92 | 13,10 | 12,00 |

Ce tableau montre que la combinaison des premier et second sels selon l'invention associés au peroxyde de di-(2 tertiobutyl isopropyl) benzène, avec une matrice élastomère constituée d'un autre EPDM que ceux utilisés précédemment, confère au profilé constitué de la composition I18 une surface pratiquement non collante (niveau de collant égal à 9) à l'instar de la surface qui caractérise le profilé constitué de la composition T5 réticulée au soufre, tout en conférant à cette composition I18 une DRC qui est nettement minimisée par rapport à celle de cette composition T5 et similaire à celle de la composition T6 réticulée au peroxyde.

On notera également que les propriétés de dureté et d'allongement à la rupture de cette composition I18 selon l'invention sont satisfaisants, étant analogues ou supérieures à celles de la composition T5.

**X/ Dixième série d'essais :**

On a préparé à nouveau des compositions T5 et T6 telles que décrite au § IX/ ci-dessus et une nouvelle composition I19 selon l'invention qui se distingue uniquement de la composition I18 du § IX/ en ce qu'elle comprend en outre un mélange desdits co-agents de réticulation TAC et TMPTMA pour augmenter la dureté de la composition.

Comme précédemment, ce mélange est constitué de 4 pce de « TAC 70 GR » et de 2 pce de « TMPTA 70 ».

On a préparé et analysé chaque composition réticulée T5, T6 et I19 comme indiqué au § I/ ci-dessus. Le tableau 10 ci-après recense les propriétés obtenues à l'état non réticulé, pendant la réticulation et à l'état réticulé pour chaque composition de caoutchouc T5, T6 et I19.

### Tableau 10 :

|  | T5 | T6 | I19 |
|---|---|---|---|
| ML(1+4) | 89,0 | 85,0 | 79,0 |
| t5 grillage (min.) | 13,47 | 6,70 | 6,27 |
| ML (dN.m) | 5,17 | 6,81 | 3,88 |
| MH (dN.m) | 17,19 | 14,00 | 14,31 |
| ΔC (dN.m) | 12,02 | 7,19 | 10,43 |
| t'c(05) (min.) | 1,38 | 0,50 | 0,45 |
| t'c(50) (min.) | 2,53 | 2,65 | 2,47 |
| t'c(95) (min.) | 6,10 | 11,25 | 9,47 |
| **Collant** | **9** | **0** | **10** |
| Densité | 1,26 | 1,26 | 1,26 |
| Shore A | 76 | 63 | 72 |
| **DRC (%)** | **62** | **27** | **27** |
| MAS 100 (MPa) | 6,2 | 3,0 | 3,0 |
| MAS 300 (MPa) | - | - | - |
| Fr (MPa) | 9,8 | 4,6 | 5,0 |
| AR (%) | 163 | 215 | 153 |
| Rés. déchir. (N/mm) | 12 | 10 | 10 |

Ce tableau montre que l'incorporation d'un mélange de co-agents TAC et TMPTMA à la composition I19 comprenant la combinaison des premier et second sels selon l'invention associés au peroxyde de di-(2 tertiobutyl isopropyl) benzène, confère au profilé constitué de la composition I19 une surface véritablement non collante (niveau de collant égal à 10) en comparaison de celle quelque peu collante qui caractérise le profilé constitué de la composition T5 (niveau de collant égal à 9), tout en conférant à cette composition I19 une DRC nettement minimisée par rapport à celle de cette composition T5.

On notera également que les propriétés de dureté et d'allongement à la rupture de cette composition I19 selon l'invention sont satisfaisantes, étant sensiblement analogues à celles de la composition T5.

### XI/ Onzième série d'essais :

On a préparé une nouvelle composition de caoutchouc T7 « témoin » qui est réticulée par un peroxyde organique, et une nouvelle composition de caoutchouc I20 selon l'invention également réticulée par ce peroxyde.

La composition T7 présente la formulation suivante (exprimée en pce: parties en poids pour cent parties d'élastomère):

| | |
|---|---:|
| Elastomère (1) | 100,00 |
| Noir de carbone | 160,00 |
| Charge claire diluante | 50,00 |
| Plastifiant paraffinique | 105,00 |
| Agent desséchant (2) | 7,00 |
| Triallyl cyanurate à 70 % (3) | 3,00 |
| Peroxyde organique (4) | 8,00 |

Avec (1) = à base d'un terpolymère d'éthylène, de propylène et d'éthylidène norbornène (EPDM) dont le taux massique de propylène est de 40 % ;

(2) : oxyde de calcium sur support ;

(3) : TAC de dénomination « TAC 70 GR » et (4) : peroxyde précité de dénomination « Perkadox 1440 B GR ».

La composition 120 selon l'invention se distingue uniquement de la composition T7 en ce qu'elle comprend en outre 4 pce d'octoate de manganèse combinés à 2 pce d'octoate de zinc, tels que décrits au § I/ ci-dessus.

On a préparé et analysé chaque composition réticulée T7 et 120 comme indiqué au § I/ ci-dessus. Le tableau 11 ci-après recense les propriétés obtenues à l'état non réticulé, pendant la réticulation et à l'état réticulé pour chaque composition de caoutchouc T7 et 120.

## Tableau 11 :

|  | T7 | I20 |
|---|---|---|
| ML(1+4) | 50,0 | 53,0 |
| t5 grillage (min.) | 15,68 | 23,28 |
| ML (dN.m) | 1,99 | 1,90 |
| MH (dN.m) | 17,19 | 15,75 |
| ΔC (dN.m) | 15,20 | 13,85 |
| t'c(05) (min.) | 0,55 | 0,57 |
| t'c(50) (min.) | 3,90 | 3,37 |
| t'c(95) (min.) | 15,83 | 14,20 |
| **Collant** | **5** | **8** |
| Densité | 1,23 | 1,23 |
| Shore A | 66 | 66 |
| **DRC (%)** | **5** | **7** |
| MAS 100 (MPa) | 4,0 | 3,6 |
| MAS 300 (MPa) | - | - |
| Fr (MPa) | 8,3 | 7,9 |
| AR (%) | 205 | 213 |
| Rés. déchir. (N/mm) | 12,82 | 12,13 |

Ce tableau montre que la combinaison des sels selon l'invention associés au peroxyde de di-(2 tertiobutyl isopropyl) benzène, avec une matrice élastomère constituée d'un autre EPDM, confère au profilé constitué de la composition I20 une surface pratiquement non collante (niveau de collant égal à 8) contrairement à la surface du profilé constitué de la composition T7 réticulée au peroxyde, tout en conférant à la composition 120 une DRC très réduite qui est similaire à celle de cette composition T7.

On notera également que les propriétés de dureté et d'allongement à la rupture de cette composition I20 selon l'invention sont satisfaisantes.

### XII/ Douzième série d'essais :

On a préparé à nouveau une composition T7 telle que décrite au § XI/ ci-dessus et une nouvelle composition I21 selon l'invention qui se distingue uniquement de la composition I20 du § XI/ en ce qu'elle comprend en outre ledit co-agent de réticulation TAC selon une quantité de 3 pce.

On a préparé et analysé chaque composition réticulée T7 et I21 comme indiqué au § I/ ci-dessus. Le tableau 12 ci-après recense les propriétés obtenues à l'état non réticulé, pendant la réticulation et à l'état réticulé pour chaque composition de caoutchouc T7 et I21.

## Tableau 12 :

|  | T7 | I21 |
|---|---|---|
| ML(1+4) | 50,0 | 52,0 |
| t5 grillage (min.) | 10,73 | 16,60 |
| ML (dN.m) | 2,03 | 1,75 |
| MH (dN.m) | 17,47 | 15,84 |
| ΔC (dN.m) | 15,44 | 14,09 |
| t'c(05) (min.) | 0,55 | 0,57 |
| t'c(50) (min.) | 3,82 | 3,27 |
| t'c(95) (min.) | 15,77 | 12,97 |
| **Collant** | **0** | **10** |
| Densité | 1,23 | 1,23 |
| Shore A | 63 | 62 |
| **DRC (%)** | **10** | **11** |
| MAS 100 (MPa) | 4,3 | 3,5 |
| MAS 300 (MPa) | - | - |
| Fr (MPa) | 7,5 | 7,7 |
| AR (%) | 181 | 218 |
| Rés. déchir. (N/mm) | 12,50 | 12,50 |

Ce tableau montre également que la combinaison des sels selon l'invention associés au peroxyde de di-(2 tertiobutyl isopropyl) benzène confère au profilé constitué de la composition I21 une surface véritablement non collante (niveau de collant égal à 10) contrairement à la surface du profilé constitué de la composition T7, tout en conférant à cette composition I21 une DRC extrêmement réduite qui est similaire à celle de cette composition T7.

En conclusion, on notera que les compositions I1 à I21 selon l'invention sont utilisables pour constituer des profilés d'étanchéité non collants, par exemple pour automobiles ou pour le bâtiment, qui présentent une DRC réduite en comparaison de celle des profilés connus de mêmes dimensions qui sont réticulés au soufre ou, en d'autres termes, qui présentent des dimensions réduites en comparaison de celles de ces profilés réticulés au soufre pour l'obtention d'une même DRC prédéterminée.

On notera en outre que les compositions de caoutchouc obtenues dans ces exemples de réalisation de l'invention sont dépourvues de tout solvant ou composé organique volatil potentiellement toxique et susceptible de générer des bulles dans les compositions réticulées, contrairement aux compositions de collant réduit testées dans le document précité US-A-4 334 043 de l'état de la technique antérieure.

**Revendications**

1.   Composition de caoutchouc réticulable ou réticulée qui est utilisable pour constituer à l'état réticulé un profilé d'étanchéité présentant une surface non collante et une déformation rémanente à la compression réduite, ladite composition étant à base d'au moins un élastomère et comprenant un système de réticulation comprenant au moins un peroxyde organique, **caractérisée en ce qu'**elle comprend :
(pce : parties en poids pour cent parties d'élastomère(s))

- selon une quantité égale ou supérieure à 2 pce, au moins un premier sel organique d'au moins un métal de transition choisi dans le groupe constitué par le manganèse, le fer, le cérium et le vanadium, et
- selon une quantité égale ou supérieure à 2 pce, au moins un second sel organique d'au moins un autre métal de transition choisi dans le groupe constitué par le zinc, le zirconium, le lithium, le calcium et le baryum.

2. Composition de caoutchouc selon la revendication 1, **caractérisée en ce qu'**elle comprend ledit peroxyde organique selon une quantité de produit actif égale ou supérieure à 2,8 pce, ledit peroxyde répondant à la formule générale ROOR, dans laquelle R est un radical hydrocarboné aliphatique, alicyclique ou aromatique substitué ou non.

3. Composition de caoutchouc selon la revendication 1 ou 2, **caractérisée en ce que** ledit ou chaque premier sel et ledit ou chaque second sel sont chacun indépendamment un sel d'un acide monocarboxylique ou dicarboxylique de type aliphatique saturé ou insaturé, de type alicyclique ou de type aromatique à un ou plusieurs cycles aromatiques substitués ou non.

4. Composition de caoutchouc selon la revendication 3, **caractérisée en ce que** ledit ou chaque premier sel et/ou ledit ou chaque second sel sont issus d'acides monocarboxyliques aliphatiques saturés identiques ou différents, tels que l'acide acétique, l'acide 2-éthylhexanoïque et l'acide stéarique.

5. Composition de caoutchouc selon la revendication 4, **caractérisée en ce que** ledit ou chaque premier sel et/ou ledit ou chaque second sel sont issus de l'acide 2-éthylhexanoïque.

6. Composition de caoutchouc selon la revendication 3, **caractérisée en ce que** ledit ou chaque premier sel et/ou ledit ou chaque second sel sont issus d'acides monocarboxyliques identiques ou différents de type alicyclique, tels que l'acide naphténique.

7. Composition de caoutchouc selon une des revendications précédentes, **caractérisée en ce qu'**elle comprend un sel de manganèse à titre de premier sel.

8. Composition de caoutchouc selon une des revendications précédentes, **caractérisée en ce qu'**elle comprend un sel de zinc et/ou un sel de zirconium, à titre de second(s) sel(s).

9. Composition de caoutchouc selon les revendications 7 et 8, **caractérisée en ce qu'**elle comprend un sel de manganèse, tel que le 2-éthylhexanoate de manganèse, et un sel de zinc, tel que le 2-éthylhexanoate de zinc.

10. Composition de caoutchouc selon une des revendications précédentes, **caractérisée en ce qu'**elle comprend le (s)dit(s) premier(s) sel(s) selon une quantité égale ou supérieure à 4 pce et le(s)dit(s) second(s) sel(s) selon une quantité égale ou supérieure à 3 pce.

11. Composition de caoutchouc selon la revendication 10, **caractérisée en ce qu'**elle comprend, selon une quantité allant de 4 à 8 pce, du 2-éthylhexanoate de manganèse et, selon une quantité allant de 3 à 6 pce, du 2-éthylhexanoate de zinc.

12. Composition de caoutchouc selon une des revendications précédentes, **caractérisée en ce que** ledit ou l'un au moins desdits élastomère(s) est un terpolymère d'éthylène, de propylène et d'un diène.

13. Composition de caoutchouc selon la revendication 12, **caractérisée en ce que** ledit système de réticulation comprend en outre, selon une quantité allant de 2 à 4 pce, du triallyl cyanurate et, selon une quantité allant de 1 à 3 pce, du triméthylolpropane triméthacrylate.

14. Composition de caoutchouc selon une des revendications précédentes, **caractérisée en ce qu'**elle comprend, selon une quantité supérieure à 100 pce, une charge renforçante à base d'un noir de carbone.

15. Composition de caoutchouc selon une des revendications précédentes, **caractérisée en ce qu'**elle présente à

27

l'état réticulé une déformation rémanente à la compression (DRC en %), mesurée selon la norme NF T46-011, qui est inférieure ou égale à 30 %.

16. Procédé de préparation d'une composition de caoutchouc selon une des revendications précédentes, **caractérisé en ce qu'**il comprend l'incorporation à ladite composition réticulable desdits premier(s) et second(s) sels par travail mécanique, suivie d'une réticulation à l'air chaud de ladite composition.

17. Procédé de préparation selon la revendication 16, **caractérisé en ce qu'**il comprend le mélangeage *in situ* desdits premier(s) et second(s) sels lors de leur incorporation à ladite composition réticulable.

18. Profilé d'étanchéité utilisable pour l'isolation de bâtiments ou d'automobiles, **caractérisé en ce qu'**il est constitué d'une composition de caoutchouc selon une des revendications 1 à 15.